# EUROPEAN PATENT SPECIFICATION

(11) **EP 0 438 489 B1**
(45) Date of publication and mention of the grant of the patent: **29.06.1994**
(21) Application number: 89911836.8
(22) Date of filing: 11.10.1989
(51) Int. Cl.: F16H 63/42

(54) **GEAR POSITION SENSOR**
FÜHLER FÜR DEN STAND DES GETRIEBES
DETECTEUR DE POSITION D'ENGRENAGE

(30) Priority: 12.10.1988 GB 8823961
(43) Date of publication of application: 31.07.1991
(73) Proprietor: AUTOMOTIVE PRODUCTS PUBLIC LIMITED COMPANY, Leamington Spa Warwickshire CV31 3ER (GB)
(72) Inventor: PARSONS, David, Warwickshire CV8 1AB (GB); YOUNG, Alastair, John, Warwickshire CV8 1DW (GB)
(74) Representative: Morrall, Roger
(86) International application number: GB8901199
(87) International publication number: WO9004122

(56) References cited:
- EP-A- 0 145 684
- EP-A- 0 175 061
- DE-A- 3 218 143
- GB-A- 531 413
- GB-A- 2 024 965
- GB-A- 2 075 621

## Description

This invention concerns a gear position sensor and also a transmission for a motor vehicle in which the transmission is provided with such a sensor.

Typically a motor vehicle transmission may be of a type comprising a change-speed gearbox having a plurality of gear ratios which are mutually exclusively engageable so that at any instant only one of the ratios can be engaged, a movable member which can be moved in first and second opposite directions and also in third and fourth opposite directions which are transverse to said first and second directions such that said member can be moved to any desired one of a plurality of pre-determined positions each corresponding to the engagement of a respective one of said gear ratios, and the movement of said member to a said pre-determined position causing the engagement of the corresponding gear ratio.

In one known transmission of the above type, the movable member can be a shaft which is translatable in opposite directions along its axis and rotatable in opposite directions about that axis, such movement of the shaft moving a striker arm to operate selector forks causing engagement and disengagement of said gear ratios. The movement of the shaft can be sensed by electrical switches as is shown in DE-A-3218143.

In another known transmission of the above type the movable member can be part, for example a lower end, of a gear shift lever manually movable by the vehicle driver who can grasp its upper end, said movable member forming or acting on a striker arm to operate selector forks causing engagement and disengagement of said gear ratios. GB-A-2075621 discloses a sensor arranged external of the gear box which senses movement of an extension of the gear box selector shaft.

The present invention provides a gear position sensor for mounting externally of the gear box and which is separate from the gearbox selector shaft.

According to the present invention there is provided a gear position sensor for mounting externally of a gear box to indicate which gear or group of gears has been engaged in a change speed transmission, characterised in that the sensor comprises a sensor shaft separate from, but connectable to, a gear box selector shaft, the sensor shaft being axially movable and rotatable relative to its longitudinal axis, a first sensing means for sensing axial translations of the sensor shaft and a second sensing means for sensing rotational translations of the sensor shaft, the sensor shaft having an arm extending radially of said axis the radially outer end of the arm terminating in a universal joint for connection to a gear box selector shaft for movement of the sensor shaft with the selector shaft.

Signals from the first and second sensing means may be used to indicate the various positions in which the second sensing means may be arranged to sense the position of a member rotated by the shaft. In such a case, the member rotatable by the shaft may be drivably connected to the shaft by means which permits axial movement between the shaft and rotary member. Such a drive arrangement may comprise a non-circular or part circular shaft located in a non-circular or part circular bore in the rotary member or may comprise pin and slot arrangement which permits relative axial movement but allows rotary movement to be transmitted.

Where the first sensing means senses the position of a member rotated by axial movement of the shaft. The member rotated by the shaft may be in the form of a e.g. an elongate tube or a shorter tube, say, in the form of a collar, and the shaft may be arranged for axial movement in the tube.

The aforesaid second sensing means may be arranged adjacent one end of the said tube and my be driven by a suitable means by said one end of the said tube. Where the sensing means is a potentiometer, the tube may be arranged to operate a wiper arm of the potentiometer.

Where the aforesaid pin and slot drive arrangement is provided, the pin may be slidable in an axially extending slot formed in the rotary member, and the pin may include a head portion which fits accurately between opposite edges of the slot.

The shaft may have a circumferential contour which, during rotary movement of the shaft, prevents interference taking place between the shaft and the member rotated by axial movement of the shaft.

Such a rotatable member may comprise an arm extending from a shaft of a potentiometer and said contour prevents the shaft being bent during rotational movement of the shaft. The contour may be provided by means of a slot arrangement in the shaft, the slot providing either a flat bottom or some other contour which will remain spaced from the member rotated by axial movement of the shaft.

The sensor includes a universal joint part capable of transmitting movement in at least two directions transverse to each other (preferably at right angles to each other) in response to input movement applied to the joint part, the joint part preferably being arranged to receive a movement from a gearbox selector shaft associated with the transmission for selecting said ratio or one of the predetermined group of ratios, the joint part providing an output movement which causes movement of the gear sensor shaft to take place.

The joint part may comprise a ball member connected to the gear sensor shaft and the ball member may be slidably disposed in a closely surrounding cylindrical socket connected to the gear box selector shaft.

The sensor may be positioned on a mounting part which remains stationary relative to the gearbox or may be positioned on the gearbox itself. In the latter case, the sensor may have a casing mounted on the gearbox or a part of the casing of the gearbox could be adapted to receive the sensor. Where the sensor is mounted on the gearbox installation in a vehicle is simplified.

The first and second sensing means may comprise potentiometers.

Alternatively, the sensing means may include switches or may include devices responsible to a magnetic field of influence. In the latter case, an array of magnets may provide the magnetic field and the response by the device or devices will be in accordance with relative movement between the device or devices and the array caused by movement of the shaft. The array may be carried by a member fixed to the shaft so as to be movable both in a rotary and/or a translational sense. The device or devices are preferably stationary, e.g., on part of a casing for the sensor, and the array of magnets movable in accordance with movement of the shaft.

The invention will now be further described, by way of example, with reference to the accompanying drawings in which:-
Fig 1 is a diagrammatic representation of an embodiment of a motor vehicle transmission invention.
   including an embodiment of a gear position sensor in accordance with the invention e.g., as shown in Fig.3,
Fig.2 shows the gear shift pattern to be followed by a manually operated gear shift lever in Fig.1 for engaging any desired gear ratio,
Fig.3 is a diagrammatic view showing in cross-section an embodiment of a gear position sensor in accordance with the invention,
Fig.4 is a fragmentary section on line IV-IV in Fig.3,
Fig.5 is a fragmentary section on line V-V in Fig.3,
Fig.6 shows a gear shift pattern which is followed by a shaft in the gearbox in Fig.1 and by a shaft in the gear position sensor in Fig.3 when the manual gear shift lever in Fig.1 is moved according to the pattern in Fig.2,
Fig.7 is a diagrammatic view showing in cross-section a second embodiment of a gear position sensor formed according to the invention for use in the transmission in Fig.1 in place of the sensor in Fig.3,
Fig.8 is a fragmentary section on line VIII-VIII in Fig.7,
Fig.9 shows a gear shift pattern (which is followed by a shaft in the gearbox in Fig.1 and by a shaft in the gear position sensor in Fig.7 when the manual gear shift lever in Fig.1 is moved according to the pattern in Fig.2) in combination with a diagrammatic representation of Hall effect transistors and magnets of the sensing means is Fig.7,
Fig.10 is a table showing which sensors in the gear position sensor in Fig.7 are providing signals to indicate which gears are engaged,
Fig.11 shows a third embodiment of a gear position sensor partly in cross-section for use in the transmission in Fig.1 in place of the sensors in Figs.3 and 7,
Fig.12 is a fragmentary section on line XII - XII in Fig.11, and
Fig.13 is a fragmentary section on line XIII - XIII in Fig.11.

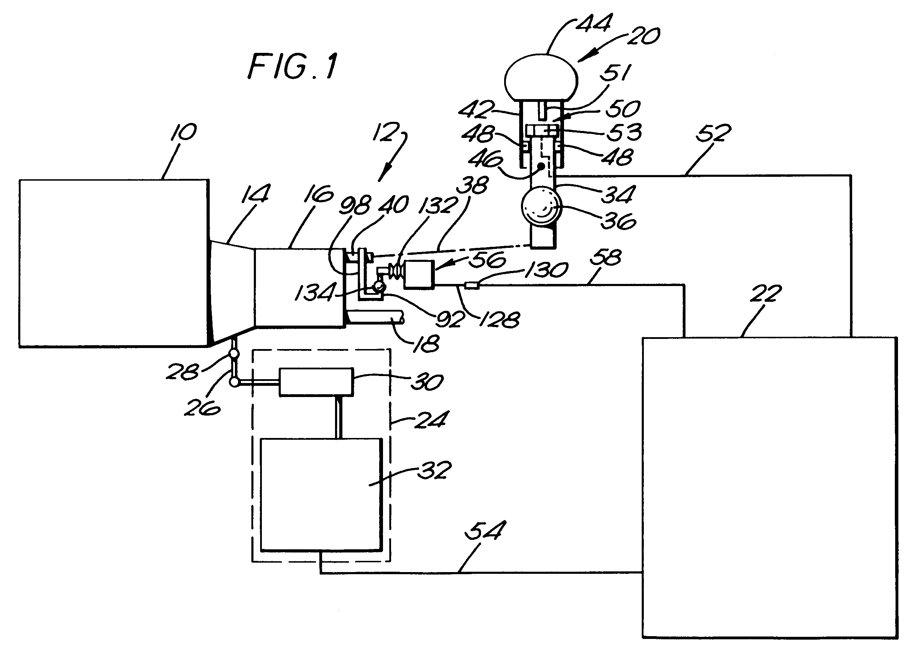

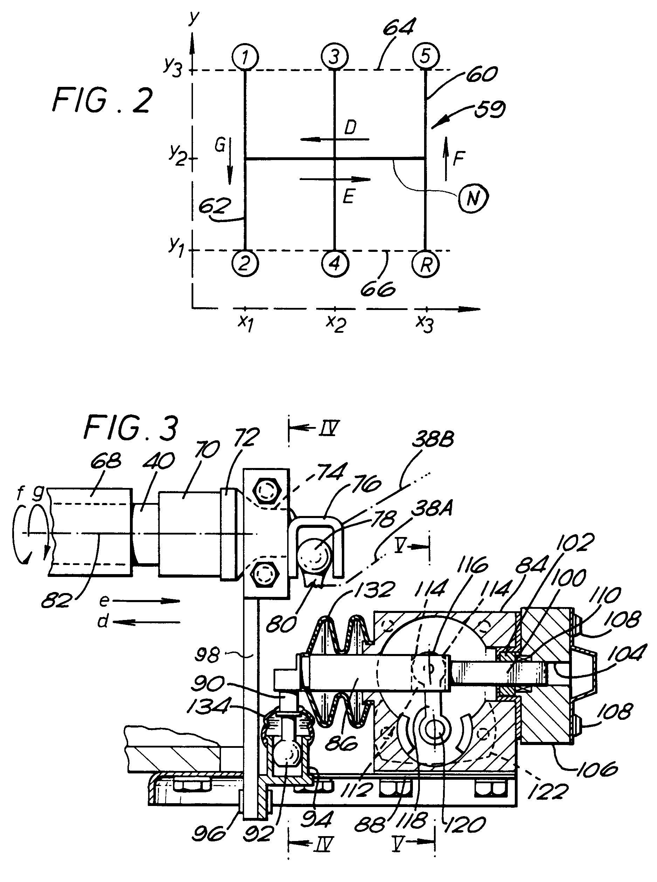

With reference to Fig.1 of the accompanying drawings, an internal combustion engine is shown at 10, and at 12 a semi-automatic transmission for a motor vehicle (not shown). The transmission comprises a clutch 14, for example a diaphragm spring clutch, and a change-speed gearbox 16 having an output shaft 18 for supplying rotary drive to one or more road wheels (not shown) and a rotary motion input shaft (not shown) on which is mounted in known manner a clutch driven plate. Gearbox 16 comprises a plurality of mutually exclusively selectable gear ratios (known per se) any desired one of which is selectable ( in the course of a driver making a gear change) by a suitable pre-determined manual movement of a gear shift lever 20 to disengage or de-select the said ratio currently engaged and then select or engage any desired said gear ratio. A clutch control for automatically engaging and disengaging the clutch comprises an electronic control 22 and a fluid flow control 24. The electronic control comprises computer means. The clutch is disengaged and reengaged using a release lever or fork 26 pivoted at 28 and interacting in known manner with the clutch. A fluid pressure piston and cylinder unit or actuator 30 acts on the lever 26 so that the rate and degree of engagement or disengagement of the clutch at any instant is controlled by the amount of fluid in the actuator 30. The amount of fluid, which may be hydraulic fluid, acting in actuator 30 is controlled by a fluid pressure supply and control system 32 forming the fluid flow control 24 with the actuator. Shift lever 20 includes a shaft 34 provided with a known gear lever pivot 36 permitting the shift lever a degree of universal movement. Shaft 34 is connected by any means 38 known per se for conveying movement of the shift lever 20 to a selection shaft 40 causing engagement and disengagement of any desired said gear ratio when the shift lever 20 is moved according to the gear shift pattern shown in Fig.2. In additional to the shaft 34 the gear shift lever 20 also comprises a tube 42 (shown in section) surmounted by a knob 44. Tube 42 is mounted by a pivot 46 on the shaft 34. Knob 44 is intended for application of manual force directly thereto by the hand of the driver, for changing gear. When no manual force is applied the tube 42 adopts a centralised or initial position with respect to the shaft 34 under the action of resilient means 48 acting between the shaft and tube. On the other hand when sufficient manual force is applied to the knob 44 the tube 42 initially tilts slightly relative to the lever 34, about pivot 46, before the lever 34 is moved by further manual force on the tube to move the selection shaft 40. This initial tilting of the tube 42 is taken as indicating a wish by the driver to change gear, and tilt sensor means 50 (comprising a magnet 51 and Hall effect transistor device 53) gives a tilt signal on channel 52 when a tilt has occurred. In response the electronic control 22 gives an output disengage clutch signal on channel 54 causing clutch control 24 to automatically disengage the clutch 14. Thereafter, engagement of any desired gear ratio is observed by a gear position sensor 56 providing a gear engagement completed signal on channel 58. In response the control 22 gives an output re-engage clutch signal on channel 54 causing the control 24 to automatically re-engage the clutch 14.

In a modification the fluid flow control 24 may be replaced by another controllable force producing arrangement acting on the release lever 26. For example the release lever 26 may be moved by an electric control system comprising an electric motor operated in accordance with signals from the electronic control 22.

As indicated in gear shift pattern 59 in Fig.2, the gearbox 16 in Fig.1 has five forward ratios constituting first, second, third, fourth and fifth gears and a reverse ratio any desired one of which can be engaged by moving the gear lever 20 (Fig.1) to position 1, 2, 3, 4, 5 or R respectively in the gear shift pattern. When the gearbox is in neutral, the gear shift lever 20 (Fig.1) adopts position N in Fig.2. In the gear shift pattern 59 the knob 44 on the gear shift lever can be manually moved (with the upper part of shaft 34) in opposite directions D and E between opposite ends 60 or 62 of the pattern and can be moved in opposite directions F and G (transverse to directions D and E) between opposite sides 64 and 66 of the shift pattern.

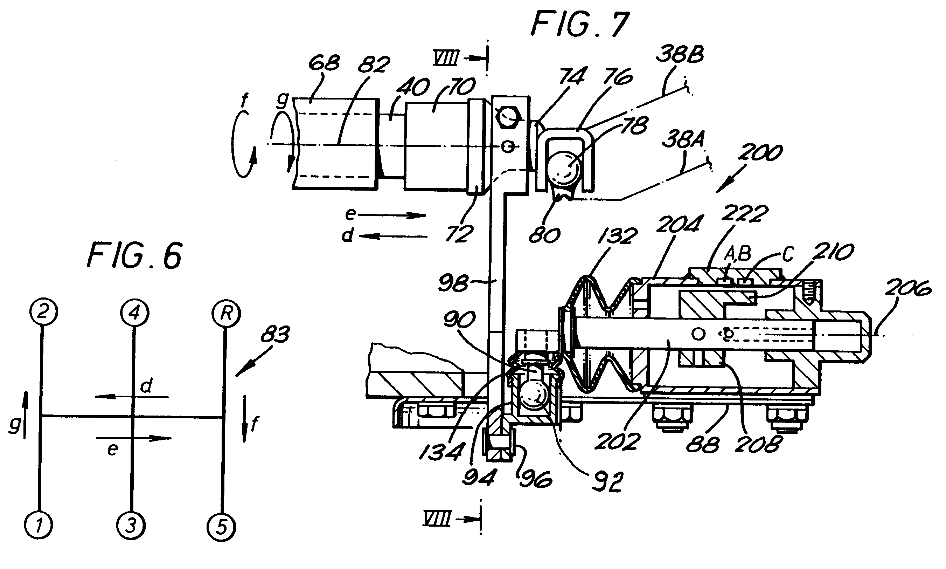

Referring now to Figs.3 to 6, the selection shaft 40 is slidable and rotatable in a fixed sleeve 68 provided on the gearbox 16 (Fig.1). The shaft 40 can be provided in known manner with a striker arm (not shown) acting on selector forks (not shown) which act in known manner in the gearbox 16 to cause engagement of any desired one of said gear ratios. One end of the shaft 40 is enlarged at 70 and has a collar 72 extending into a neck 74. A channel shaped arm 76 of an inverted U-shaped cross-section is welded to the neck 74. A ball head 78 on a lever 80 closely fits in the inverted channel within the arm 76. The connecting means 38 (Fig.1) is a mechanical connection divided into two connection systems 38A and 38B. The connection system 38A acts on the lever 80 so that the selection shaft 40 is translated along its axis 82 in opposite directions d and e when the gear lever knob 44 (Fig.1) is moved in directions D and E (Fig.2) respectively. The connection system 38B acts on the arm 76 to rotate the selection shaft 40 about its axis 82 in opposite directions f and g when the gear lever knob 44 is moved in directions F and G (Fig.2) respectively. Thus when the shift lever 20 is moved in accordance with the pattern 59 (Fig.2), the selection arm 40 moves in accordance with gear shift pattern 83 in Fig.6 to cause engagement of the desired one of the first, second, third, fourth, fifth or reverse gear when the selection shaft 40 is moved into an attitude corresponding to 1, 2, 3, 4, 5 or R in Fig.6.

The gear position sensor 56 includes a casing 84 containing and supporting a shaft 86 (constituting said movable component) which is translatable in opposite directions along its axis and is rotatable in opposite directions about that axis. The casing 84 is firmly secured to a mounting plate 88 which is stationarily mounted relatively to the selection shaft 40. An end of the sensor shaft 86 extending beyond the casing 84 is fast with one end of a stud arm 90 having a ball head 92 slidably but closely contained in a socket 94 of cylindrical shape firmly secured by rivets 96 to one end of an arm 98 clamped fast at its other end with the neck 74. The arm 98 is free to follow the movements of the shaft 40. The ball 92 and socket 94 constitute a form of universal joint. Not only is translatory movement in directions d and e transmitted from the selection shaft 40 (via arm 98) to the sensor shaft 86 by the joint 92, 94 but the joint also transmits to the sensor shaft rotary movements in the same directions f and g as performed by the selection shaft. But in performing those rotary movements the stud shaft 90 and ball head 92 also move along the axis of the cylindrical socket 94 which is at a right angle to the movement of the ball 92 in directions d and e.

The sensor shaft 86 has an end portion 100 which is axially slidable in a tube comprising a collar 102 which is rotationally fast with the shaft portion 100 so that the collar is rotated by rotation of the shaft 86. For example the shaft portion 100 may be of square or other polygonal cross-section engaged in a similarly shaped hole through the collar 102. The shaft portion 100 is freely movable within a central passage 104 in a rotary potentiometer 106 which has a body stationarily secured by screws 108 to an end of the casing 84. Rotary movement is applied to the potentiometer wiper contact (not shown) from the sensor shaft 86 by means of a dog drive 110 between the collar 102 and the potentiometer 106.

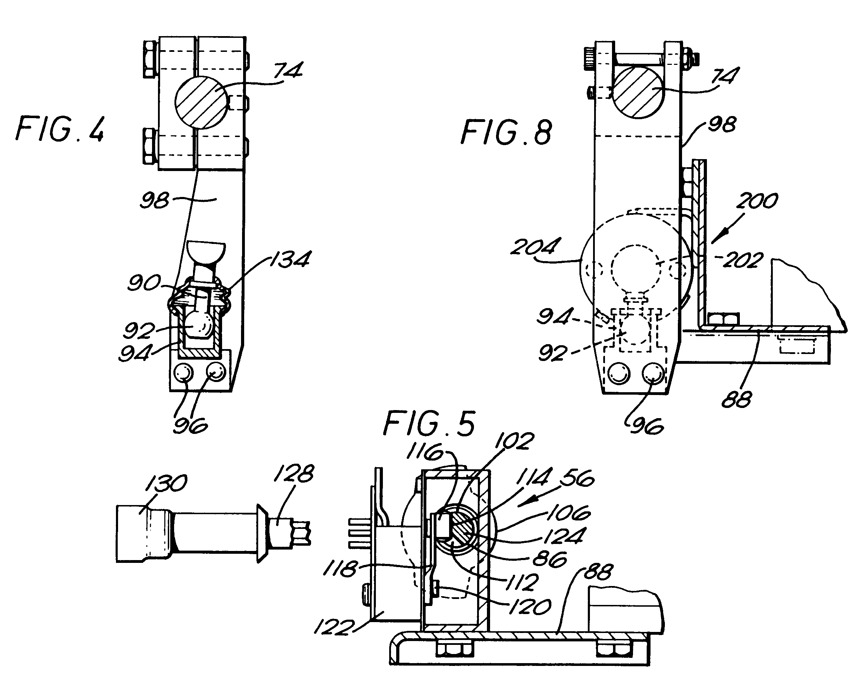

A notch 112 is formed in a side of the sensor shaft 86. That notch has spaced parallel sides 114 engaging in rolling contact the periphery of a roller 116 rotatably mounted on one end of an arm 118 mounted on a shaft of a potentiometer upper arm (not shown) 120 and providing rotary input movement for a potentiometer wiper contact (now shown) of a rotary potentiometer 122 mounted on the side of casing 84. Thus as shaft 86 is translated, rotary movement is input to the potentiometer 122. At the notch 112 the shaft 86 is formed by a shaft portion 124 which has a circumferential contour of wedge-shaped cross-section (see Fig.5) the point of which faces towards the roller 116. Thus the shaft portion 124 does not push the roller 116 away from the shaft 86 during the limited rotary motions of the latter, and there is no tendency to bend back the arm 118.

An electrical cable and connector is indicated in Fig.5 at 128 and 130 respectively.

Rubber sealing boots are shown at 132 and 143, the shaft 86 being rotatable in the boot 132.

Because the sensor shaft 86 replicates the translation movements in directions d and e of the selection shaft 40, the electrical output signal (voltage or current) from potentiometer 122 represents at any instant the position of the shaft 40 along direction d or e in the pattern 83 in Fig.6. Also the sensor shaft 86 replicates the angular movements in directions f and g of the selection shaft 40 in the pattern 83 (Fig.6). Thus the electrical output signal from potentiometer 106 represents at any instant the position of the selection shaft 40 along direction f or g.

If we assume with reference to Fig.2 that potentiometer 122 gives an electrical signal x and the potentiometer 106 an electrical signal y, then occurrence of a signal y2x indicates that the gearbox 16 is in neutral. The engagement of any gear ratio is identified by the occurrence of an x signal of a pre-determined value and a y signal of pre-determined value. For example when fourth gear is engaged the potentiometers give the signal of x2, y1. Thus at any instant the control 22 "knows" which particular gear ratio is engaged. The remaining combination of x, y values for the remaining rates can be seen from Fig.2.

This can be an advantage in a semi-automatic transmission as described above with reference to Fig.1 because the electronic control 22 may be programmed to re-engage the clutch in some particular re-engagement manner according to which particular gear is being engaged and possibly according to some other parameter, for example engine speed. Furthermore the control 22 may be arranged to control fuel supply means (not shown) to control automatically the amount of fuel supplied to the engine 10 during the course of a gear change. Accordingly not only may the control 22 be programmed to vary the fuel supply to the engine according to whether the gear change is an upchange or a downchange but can vary the fuel supply according to which gear ratio has been disengaged and which is being engaged.

In Fig.2 the value y2 need not be a single value. Instead y2 can represent a range of y values so that the control 22 "understands" that gearbox 16 is in neutral when the potentiometer 106 outputs a signal having a value in the range y2. Also y1 and y3 may each represent a respective range of y values, and x1, x2 and x3 may each represent a respective range of x ranges. For example the control 22 understands that fourth gear is engaged when it receives a signal in the range x2 from the potentiometer 122 (Figs.3 and 5) and simultaneously a signal in the range y1 from the potentiometer 106 (Figs.3 and 5).

Instead of using potentiometers, suitable switches or other devices could be used for rotary and translational movement. Such switches or devices could be of a contact type or proximity type such as those described below with reference to Figs.7 to 10.

In the embodiment of gear position sensor to be described with reference to Figs.7 to 10 the same reference numerals are used as in Figs.3 to 6 for like or comparable parts.

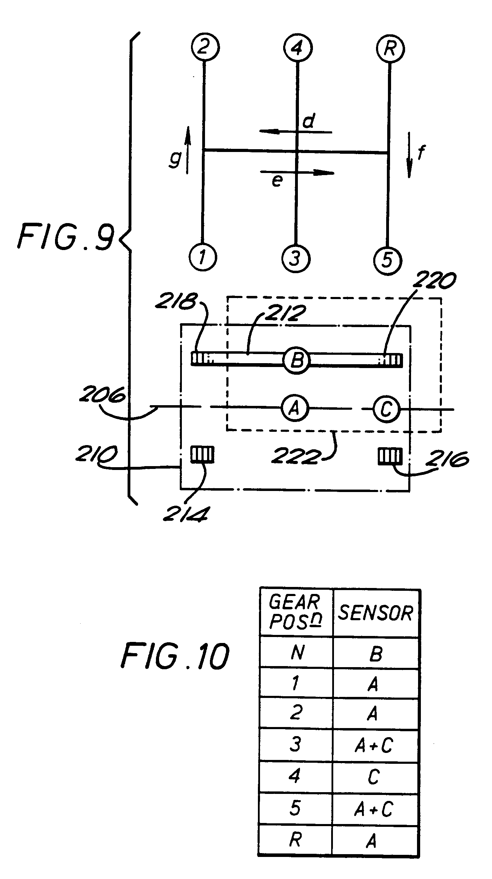

With reference to Figs.7 to 10, a gear position sensor 200 is connected to the gear selection shaft 40 by the arm 98 which drives the ball and socket joint 92, 94 driving the stud arm 90 which is fast with a sensor shaft 202. The shaft 202 is supported in a casing 204 so that the shaft can be translated along its axis 206 in opposite directions d and e and also rotate about that axis in opposite directions f and g. Affixedly mounted on the shaft 202 to move therewith is a magnet carrier 208 of non-magnetic material having an outer peripheral flange 210 of an arcuate shape extending part way about the axis 206. The flange 210 supports three arrays of magnets 212, 214 and 216 disposed as shown in Fig.9, the magnet array 212 being a rectilinear strip of magnets extending parallel to the axis 206 (Fig.7) and having opposite end portions 218 and 220. The casing 204 is formed with an aperture in which a cover 222 of non-magnetic material is securely fitted. Embedded in the cover 222 are three magnetically sensitive sensors or devices A, B and C disposed as shown in Fig.9 and adjacent to the flange 210. The sensors A, B and C are each sensitive to the magnetic field of a magnet only when the latter is substantially directly opposite or facing the sensor A, B or C so that the sensor so influenced by the magnetic field provides a signal, for example an electrical signal on line 58 in Fig.1. In Figs.7 to 10 the sensors A, B and C can each be a switch or Hall effect transistor.

When the gearbox 16 is in neutral, the attitude of the selection shaft 40 and thus the sensor shaft 202 is such that the relative position of the arrays of magnets 212, 214 and 216 and the array of sensors A, B, C is as shown in Fig.9. Thus only sensor B is opposite a magnetic array namely the middle of the magnetic array 212 and thus only sensor B gives a signal. Accordingly when sensor B gives an output signal that is an indication that the gearbox is in neutral. Should the gear shift lever 20 (Fig.1) move the gear selection shaft 40 to engage first gear, when first gear is engaged the selection shaft 40 and thus sensor shaft 202 is moved in directions d and f bringing the magnetic end portion 220 into position opposite the sensor A, which gives a corresponding output signal as indicated in Fig.10, none of the other sensors B or C is magnetically affected. When second gear is engaged magnetic array 216 brought opposite the sensor A (as indicated in Fig.10) which gives the corresponding output signal, again none of the sensors B or C is magnetically affected. On third gear being engaged both the sensors A and C give outputs (Fig.10) because the magnetic array 212 has been moved so that end portion 220 is opposite the sensor C and the middle of the array 212 is opposite the sensor A. When fourth gear is engaged the only sensor to give an output is sensor C (see Fig.10) because the magnetic array 216 has been moved opposite that sensor. The engagement of fifth gear so moves the sensor shaft 202 that the magnetic array 212 is again moved opposite the two sensors A and C (see Fig.10), but in this case the middle portion of the array 212 is opposite the sensor C and the end portions 218 is opposite the sensor A. As indicated in Fig.10, engagement of reverse gear causes only sensor A to give an output, this is caused by magnetic array 214 having been moved opposite to the sensor A.

Thus the gear position sensor 200 can distinguish between engagement of low and high gears for example when the only output is from sensor A that means that one of first, second or reverse gears has been engaged. If the output from gear position sensor 200 is or includes an output from sensor C, this means that a higher gear namely one of third, fourth, or fifth has been engaged.

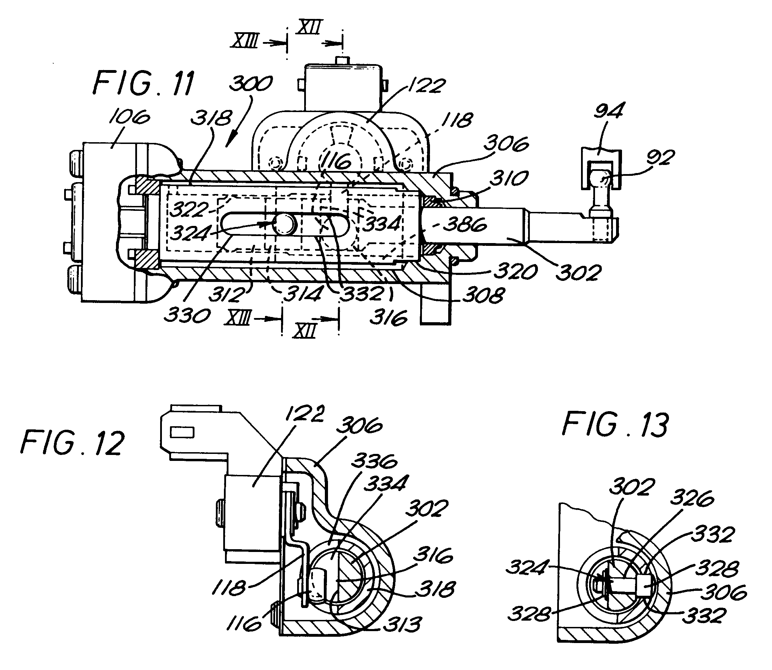

In the embodiment of gear position sensor to be described with reference to Figs.11 to 13, the same reference numerals are used as in Figs.3 to 6 for like or comparable parts.

With reference to Figs.11 to 13, a gear position sensor 300 is connected to the gear selection shaft 40 (not shown in Figs.11 to 13) by means of a ball and socket joint 92, 94, the ball 92 being located in a sensor shaft 302. The shaft 302 is supported in a casing 306 formed with a bore 308 through which the shaft 302 slidably extends. A seal 310 is positioned sealingly between the shaft 302 and the casing 306 adjacent the bore 308. The shaft 302 has an increased diameter section 312 formed with a first and second transverse grooves 314, 316. The shaft 302 is slidably mounted within a tube 318 having its right hand end rotatably mounted in a counterbore 320 in the casing 306 and having its left hand end suitably drivably connected to a wiper arm (not shown) of a rotary potentiometer 106 mounted on the casing. The left hand end of the shaft 302 includes a projection such as a peripheral bead 322 which slidably engages the inner periphery of the tube 318 to support that end of the shaft.

The shaft 302 has a radial pin 324 extending through a bore 326 (Fig.13). The pin has a head 328 which slidably locates in an axial slot 330 in the tube 318 and which engages opposite edges 332 of the slot. The pin 324 is held in the bore 326 by a retaining washer 328 or other suitable retainer which lies in the groove 316.

The groove or notch 314 has parallel sides 334 engaging in rolling contact the periphery of a roller 116 rotatably mounted on one end of an arm 118 connected to a shaft 120 of a potentiometer wiper arm (not shown) and providing rotary input to a potentiometer 122 mounted on the casing 306. The roller 116 extends through an axially extending half-cylindrical slot 336 in tube 318 which is of sufficient length so as not to interfere with the roller 116 during the full axial travel of shaft 302. The slot 336 also clears the roller 116 and arm 118 during rotary movement of the tube 318 as described below and a flat bottomed contour 313 of the slot 316 in shaft 302 prevents the shaft 302 from bending back the arm 118.

Operation of the sensor shown in Figs.11 to 13 is similar to that described with respect to Fig.3. Axial movement of the shaft 302 is arranged to operate the potentiometer 122 through arm 118. Rotary movement of the shaft 302 is transmitted via pin 324 to the tube 318. As mentioned above, the left hand end of the tube is drivably connected to a wiper arm of the potentiometer 106 so that rotation of the tube 318 operates the potentiometer 106. The signals derived from potentiometers 106, 122 are utilised in the same way as those in Fig.3.

The gear position sensor may have its operative parts mounted directly on the gearbox 16. In such an instance, the casing 84, 204 or 306 could be mounted on the gearbox or the casing 84, 204, 306 could be defined by part of a casing of the gearbox.

If desired the sensor may sense when a particular group or range of ratios has been selected as, for example by a means of a range change gearbox, overdrive gearing or the like.

## Claims

1. A gear position sensor (56) for mounting externally of a gear box (16) to indicate which gear or group of gears has been engaged in a change speed transmission, characterised in that the sensor (56) comprises a sensor shaft (86,202,302) separate from, but connectable to, a gear box selector shaft (40), the sensor shaft being axially movable and rotatable relative to its longitudinal axis, a first sensing means (122,A) for sensing axial translations of the sensor shaft and a second sensing means (106,B) for sensing rotational translations of the sensor shaft, the sensor shaft having an arm (90) extending radially of said axis the radially outer end of the arm (90) terminating in a universal joint (92) for connection to a gear box selector shaft (40) for movement of the sensor shaft (86,202,302) with the selector shaft.

2. A gear position sensor according to Claim 1 characterised in that the second sensing means (106;B) senses the position of a rotatable member (102;208;318) which can be rotated by rotary movement of the sensor shaft (86;202;302).

3. A gear position sensor according to Claim 2 characterised in that the rotatable member (102;318) is drivably connected to the sensor shaft (86;302) by means (324) which permits relative axial movement between the sensor shaft (86;302) and the rotatable member (102;318).

4. A gear position sensor according to Claim 3 characterised in that the rotatable member (102,318) is a tube and the sensor shaft (86;202;302) is arranged for axial movement within the tube.

5. A gear position sensor according to Claim 3 or Claim 4 characterised in that drive means from the sensor shaft (302) comprises a radial pin (324), which is axially slidable in an axial slot (330) formed in the sensor shaft (332).

6. A gear position sensor according to any one of claims 1 to 5 characterised in that the universal joint comprises a ball head (92) on the radially outer end of said arm (90) connectable to a socket (94) movable with the selector shaft (40).

7. A gear position sensor according to any preceding claim characterised in that the shaft (86) has a circumferential contour (124, 313) which during rotary movement of the shaft prevents interference between the shaft (86,302) and a member (118) rotated by axial movement of the shaft.

8. A gear position sensor according to any preceding claim characterised in that the two sensing means (122,A,106,B) are potentiometers.

9. A gear position sensor according to any of claims 1 to 7 characterised in that the sensing means (A,B) includes one or more devices (A,B,C) responsive to a magnetic field of influence.

10. A gear position sensor as claimed in Claim 9 characterised in that an array of magnets (212;214;216) provides said magnetic field and the response by the device or devices (A,B,C) is in accordance with relative movement between said device or devices and the array causes movement of said movable component (202).

## Patentansprüche

1. Zahnradpositionsmeßfühler (56) für die Montage außerhalb des Getriebegehäuses (16), um anzuzeigen, welches Zahnrad oder welche Zahnradgruppe in einem Schaltgetriebe in Eingriff gebracht wurde, dadurch gekennzeichnet, daß der Meßfühler (56) aufweist: eine Meßfühlerwelle (86,202,302), separat von einer Getriebegehäuseschaltwelle (40), aber mit dieser koppelbar, wobei die Meßfühlerwelle axial beweglich und relativ zu ihrer Längsachse drehbar ist; eine erste Meßvorrichtung (122,A) für das Messen der axialen Übersetzungen der Meßfühlerwelle; und eine zweite Meßvorrichtung (106,B) für das Messen der Rotationsübersetzungen der Meßfühlerwelle, wobei die Meßfühlerwelle einen Arm (90) aufweist, der sich radial von der Achse aus erstreckt, und wobei das radiale äußere Ende des Armes (90) in einem Kardangelenk (92) für eine Verbindung mit einer Getriebegehäuseschaltwelle (40) endet, um eine Bewegung der Meßfühlerwelle (86,202,302) mit der Schaltwelle zu ermöglichen.

2. Zahnradpositionsmeßfühler nach Anspruch 1, dadurch gekennzeichnet, daß die zweite Meßvorrichtung (106,B) die Position eines drehbaren Elementes (102,208,318) mißt, das durch die Drehbewegung der Meßfühlerwelle (86,202,302) gedreht werden kann.

3. Zahnradpositionsmeßfühler nach Anspruch 2, dadurch gekennzeichnet, daß das drehbare Element (102,318) steuerbar mit der Meßfühlerwelle (86,302) durch ein Mittel (324) verbunden ist, wodurch die relative axiale Bewegung zwischen der Meßfühlerwelle (86,302) und dem drehbaren Element (102,318) gestattet wird.

4. Zahnradpositionsmeßfühler nach Anspruch 3, dadurch gekennzeichnet, daß das drehbare Element (102,318) ein Rohr ist, und daß die Meßfühlerwelle (86,202,302) für eine axiale Bewegung innerhalb des Rohres angeordnet ist.

5. Zahnradpositionsmeßfühler nach Anspruch 3 oder 4, dadurch gekennzeichnet, daß die Antriebsvorrichtung von der Meßfühlerwelle (302) einen radialen Stift (324) aufweist, der axial in einem axialen Schlitz (330), der in der Meßfühlerwelle (332) gebildet wird, verschiebbar ist.

6. Zahnradpositionsmeßfühler nach einem der Ansprüche 1 bis 5, dadurch gekennzeichnet, daß das Kardangelenk einen Kugelkopf (92) am radialen äußeren Ende des Armes (90) aufweist, der mit einer Buchse (94) koppelbar ist, die mit der Schaltwelle (40) beweglich ist.

7. Zahnradpositionsmeßfühler nach einem der vorhergehenden Ansprüche, dadurch gekennzeichnet, daß die Welle (86) ein Umfangsprofil (124,313) aufweist, das während der Drehbewegung der Welle eine Störung zwischen der Welle (86,202) und einem Element (118), das durch die axiale Bewegung der Welle gedreht wird, verhindert.

8. Zahnradpositionsmeßfühler nach einem der vorhergehenden Ansprüche, dadurch gekennzeichnet, daß die zwei Meßvorrichtungen (122,A; 106,B) Potentiometer sind.

9. Zahnradpositionsmeßfühler nach einem der Ansprüche 1 bis 7, dadurch gekennzeichnet, daß die Meßvorrichtungen (A,B) ein oder mehrere Geräte (A,B,C) umfassen, die auf ein magnetisches Einflußfeld ansprechen.

10. Zahnradpositionsmeßfühler nach Anspruch 9, dadurch gekennzeichnet, daß eine Reihe von Magneten (212,214,216) das Magnetfeld bewirkt, und daß das Ansprechen des Gerätes oder der Geräte (A,B,C) in Übereinstimmung mit der relativen Bewegung zwischen dem Gerät oder den Geräten und der Reihe erfolgt, wodurch die Bewegung des beweglichen Bauteils (202) hervorgerufen wird.

## Revendications

1. Un détecteur de position d'engrenage (56) destiné à être monté à l'extérieur d'une boîte de vitesse (16) pour indiquer la vitesse ou le groupe de vitesses enclenchés dans une transmission à changement de vitesse, caractérisé en ce que la détecteur (56) comprend un arbre de détection (86, 202, 302) séparé d'un arbre de sélection d'une boîte de vitesse (40) mais pouvant être connecté à celui-ci, l'arbre de détection pouvant être déplacé axialement et tourner par rapport à son axe longitudinal, un premier moyen de détection (122,A) pour détecter des translations axiales de l'arbre de détection et un deuxième moyen de détection (106,B) pour détecter des translations rotatives de l'arbre de détection, l'arbre de détection possédant un bras (90) s'étendant radialement par rapport au dit axe, l'extrémité radialement extérieure du bras (90) se terminant dans un joint universel (92), pour la connexion à un arbre de sélection d'une boîte de vitesse (40) en vue d'assurer le déplacement de l'arbre de détection (86, 202, 302) ensemble avec l'arbre de sélection.

2. Un détecteur de position d'engrenage selon la revendication 1, caractérisé en ce que le deuxième moyen de détection (106,B) détecte la position d'un élément rotatif (102; 208; 318) pouvant être mis en rotation par suite de la rotation de l'arbre de détection (86; 202; 302).

3. Un détecteur de position d'engrenage selon la revendication 2, caractérisé en ce que l'élément rotatif (102; 318) est connecté par entraînement à l'arbre de détection (86; 302) par un moyen (324) permettant un déplacement axial relatif entre l'arbre de détection (86; 302) et l'élément rotatif (102; 318).

4. Un détecteur de position d'engrenage selon la revendication 3, caractérisé en ce que l'élément rotatif (102, 318) est un tube et en ce que l'arbre de détection (86; 202; 302) est agencé de sorte à pouvoir effectuer un mouvement axial à l'intérieur du tube.

5. Un détecteur de position d'engrenage selon les revendications 3 ou 4, caractérisé en ce que ce moyen d'entraînement de l'arbre de détection (302) comprend une cheville radiale (324) pouvant glisser axialement dans une fente axiale (330) agencée dans l'arbre de détection (332).

6. Un détecteur de position d'engrenage selon l'une quelconque des revendications 1 à 5, caractérisé en ce que le joint universel comprend une rotule (92) sur l'extrémité radialement extérieure du dit bras (90), pouvant être connectée à une douille (94), et pouvant être déplacée avec l'arbre de sélection (40).

7. Un détecteur de position d'engrenage selon l'une quelconque des revendications précédentes, caractérisé en ce que l'arbre (86) a un profil circonférentiel (124, 313), empêchant, pendant la rotation de l'arbre, une interférence entre l'arbre (86, 302) et un élément (118) mis en rotation par suite du déplacement axial de l'arbre.

8. Un détecteur de position d'engrenage selon l'une quelconque des revendications précédentes, caractérisé en ce que les deux moyens de détection (122,A; 106,B) sont des potentiomètres.

9. Un détecteur de position d'engrenage selon l'une quelconque des revendications 1 à 7, caractérisé en ce que le moyen de détection (A, B) englobe un ou plusieurs dispositifs (A,B,C) réagissant à un champ magnétique d'influence.

10. Un détecteur de position d'engrenage selon la revendication 9, caractérisé en ce qu'un groupe d'aimants (212; 214; 216) produit ledit champ magnétique, la réaction par le dispositif ou les dispositifs (A,B,C) étant fonction du déplacement relatif entre ledit dispositif ou lesdits dispositifs et le groupe entraînant le déplacement du dit composant mobile (202).
